# EUROPEAN PATENT APPLICATION

(11) **EP 4 477 499 A1**
(43) Date of publication of application: **18.12.2024**
(21) Application number: 22951776.8
(22) Date of filing: 31.10.2022
(51) Int. Cl.: B62D 21/15

(54) **FRONT CABIN AND VEHICLE**

(30) Priority: 20.07.2022 CN 202210861792
(71) Applicant: Voyah Automobile Technology Company Ltd., Hanyang District Wuhan City, Hubei 430050 (CN)
(72) Inventor: QU, Gang, Wuhan, Hubei 430050 (CN); ZHANG, Zhe, Wuhan, Hubei 430050 (CN); HOU, Chunsheng, Wuhan, Hubei 430050 (CN); ZHAO, Feng, Wuhan, Hubei 430050 (CN); LI, Pan, Wuhan, Hubei 430050 (CN); SUN, Lingfei, Wuhan, Hubei 430050 (CN)
(74) Representative: Valet Patent Services Limited
(86) International application number: PCT/CN2022/128811
(87) International publication number: WO 2024/016514

(57) **Abstract**

A front compartment (1000) is provided, including two front longitudinal beams (200), a front dash-board assembly (500), a front anti-collision-beam assembly (100), two upper side beams (300), two A-pillar inner plate assemblies (600) and two shock-tower assemblies (400). The front compartment (1000) is improved in structure to form a plurality of force transmission nodes, and therefore a collision energy can be effectively absorbed through deformations of the front longitudinal beams/the upper side beams in an event of a head-on collision, thereby reducing a deformation of a passenger compartment and further protecting the passengers. A vehicle having the front compartment is also provided.

## Description

### CROSS-REFERENCE TO RELATED APPLICATIONS

This application claims the priority to Chinese patent application No. 202210861792.6, filed on July 20, 2022, and entitled "Front compartment and Vehicle," the entire content of which is incorporated herein by reference.

### TECHNICAL FIELD

The application relates to the technical field of a structure of a vehicle body, and in particular to a front compartment and a vehicle.

### BACKGROUND

In order to obtain longer battery life and more power, an electric vehicle usually has a larger battery pack disposed at a floor area of a vehicle body. This will result in that, in comparison with a fuel vehicle, a front longitudinal beam of the electric vehicle is unable to connect to a rear longitudinal beam through a structure that continuously extends through a bottom of the floor area. The electric vehicle can only rely on structures such as the front longitudinal beam, a door sill beam, a center channel beam, and an upper side beam to transfer a collision energy, resulting in a degraded front collision performance.

The electric vehicle has a larger mass of whole vehicle in comparison with the fuel vehicle of same level. Therefore, the electric vehicle is also subjected to a greater collision energy under a same collision condition, and thus requirements for a structure of the vehicle body are also higher. At the same time, due to an increase in a weight of the electric vehicle, an impact force of a road surface on the vehicle body through a chassis will also be greater under same driving conditions, and thus stiffness/strength requirements of attachment points for the chassis at a side of the vehicle body are also higher

Current structure of a front compartment of the vehicle body abuts closely against the front longitudinal beam to transfer the collision energy and provide a primary attachment point, which cannot meet strength requirements of the front compartment.

### SUMMARY

The application provides a front compartment and a vehicle, which improve a collision performance of the front compartment by improving a structure of the front compartment to form a plurality of force transmission nodes.

According to a first aspect of the application, a front compartment is provided, including: two front longitudinal beams, distributed at an interval along a width direction of a vehicle; a front-dash-board assembly, connected to rear ends of the two front longitudinal beams; a front anti-collision-beam assembly, connected to front ends of the two front longitudinal beams; two upper side beams, respectively connected to corresponding front longitudinal beams; two A-pillar inner plate assemblies, respectively connected to corresponding front longitudinal beam and the upper side beam; two shock-tower assemblies, disposed in areas surrounded by corresponding front longitudinal beams and the upper side beams, and connected to the front dash-board assembly, the front longitudinal beams and the upper side beams.

According to a second aspect of the application, a vehicle comprising the front compartment of the first aspect is provided.

### BRIEF DESCRIPTION OF DRAWINGS

FIG. 1 is a schematic structural diagram of a front compartment according to one or more embodiments of the application.
FIG. 2 is an exploded structural diagram of a front compartment according to one or more embodiments of the application.
FIG. 3 is a schematic structural diagram of a basic frame of the front compartment in FIG. 1.
FIG. 4 is a schematic structural diagram of a front-longitudinal-beam inner plate of a front longitudinal beam of the front compartment in FIG. 1.
FIG. 5 is a schematic structural diagram of the front-longitudinal-beam inner plate of the front longitudinal beam of the front compartment in FIG. 1 from another angle of view.
FIG. 6 is a transmission path diagram of a collision energy for a front compartment according to one or more embodiments of the application.
FIG. 7 is a transmission path diagram of a collision energy for a root of the front longitudinal beam of the front compartment in FIG. 1.
FIG. 8 is a schematic diagram showing a connection structure for a front end of the front longitudinal beam of the front compartment in FIG. 1.
FIG. 9 is an assembly structural diagram of a front-dash-board assembly, the front longitudinal beam, an upper side beam, an A-pillar inner plate assembly and a shock-tower assembly of the front compartment in FIG. 1.
FIG. 10 is a schematic structural diagram of the shock-tower assembly of the front compartment in FIG. 1.
FIG. 11 is a schematic structural diagram of a front-end frame of the front compartment of FIG. 1.
FIG. 12 is a schematic diagram showing a positioning and assembly structure for a water tank column and a water tank crossbeam in the front-end frame in FIG. 11.
FIG. 13 is a schematic structural diagram of the water tank column in the front-end frame in FIG. 11.
FIG. 14 is a schematic structural diagram of a bearing bracket of the front compartment in FIG. 1.
FIG. 15 is a schematic diagram showing a connection structure between a support seat and the front longitudinal beam in the front compartment in FIG. 1.
FIG. 16 is a schematic structural diagram showing a deformation for the basic frame of the front compartment in FIG. 3 in a head-on collision situation.

Reference numerals:
1000, front compartment; 1100, basic frame; 10, A-pillar upper-side-beam; 20, support box.
100, front anti-collision-beam assembly; 110, anti collision beam; 120, energy absorption box; 130, anti-collision-beam installation plate; 140, reinforcement component, 141, reinforcement inner plate.
200, front longitudinal beam; 210, front-longitudinal-beam outer plate; 220, front-longitudinal-beam inner plate, 221, first section, 222, second section, 2221, first force transmission portion, 2222, second force transmission portion; 230, concave area; 240, convex rib; 250, notch; 260, deformation guide structure; 270, straight section; 280, transition section; 290, oblique section.
300, upper side beam; 310, upper-side-beam outer plate; 320, upper-side-beam inner plate; 330, collapse hole; 340, welding edge.
400, shock-tower assembly; 410, shock tower; 420, front wheel cover; 430, wheel cover reinforcement plate.
500, front-dash-board assembly; 510, front dash board; 520, water gutter, 521, air conditioning inlet; 522, drain outlet; 530, reinforcement beam, 531, connection portion; 540, front-dash-board crossbeam.
600, A-pillar inner plate assembly; 610, A-pillar upper section, 611, energy absorption portion, 612, energy absorption hole; 620, A-pillar lower section; 630, reinforcement box.
700,bearing bracket; 710, support seat.
800, front-end frame; 810, water tank crossbeam, 811, positioning hole; 820, water tank column, 821, bearing portion, 822, installation portion, 823, nut box, 824, floating nut, 825, positioning bolt.

### DESCRIPTION OF EMBODIMENTS

In the art, a length direction of a vehicle is usually referred to as an X direction or a longitudinal direction; a width direction of the vehicle is referred to as a Y direction or a lateral direction; and a height direction of the vehicle is referred to as a Z direction or a vertical direction. The interpretations of relevant directional expressions in the following embodiments of the application can all refer to the above contents.

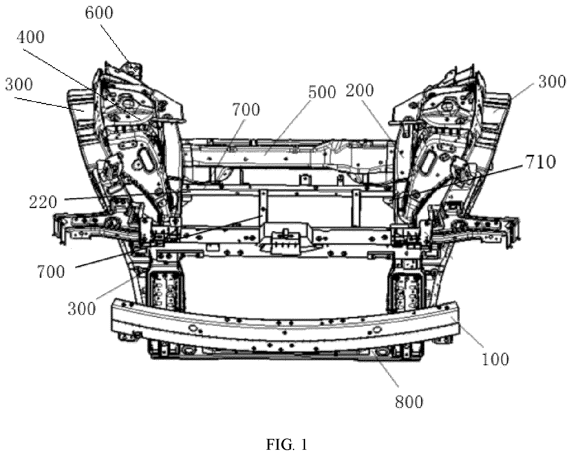

Referring to FIG. 1 to FIG. 3, a front compartment 1000 is provided according to a first aspect of the application, including a front-dash-board assembly 500, a front anti-collision-beam assembly 100, two front longitudinal beams 200 at left and right, two upper side beams 300 at left and right, two A-pillar inner plate assemblies 600 at left and right, and two shock-tower assemblies 400 at left and right. The front-dash-board assembly 500 and the front anti-collision-beam assembly 100 are respectively connected to two ends of the front longitudinal beam 200 to form a basic frame 1100 of the front compartment 1000. The two upper side beams 300 are respectively connected to corresponding front longitudinal beams 200, and the upper side beams 300 are connected to the corresponding front longitudinal beams 200 to enclose an area in which the shock-tower assembly 400 is installed. The shock-tower assembly 400 is connected to the front-dash-board assembly 500, the front longitudinal beam 200 and the upper side beam 300. The A-pillar inner plate assemblies 600 are respectively connected to a corresponding front longitudinal beam 200 and upper side beam 300.

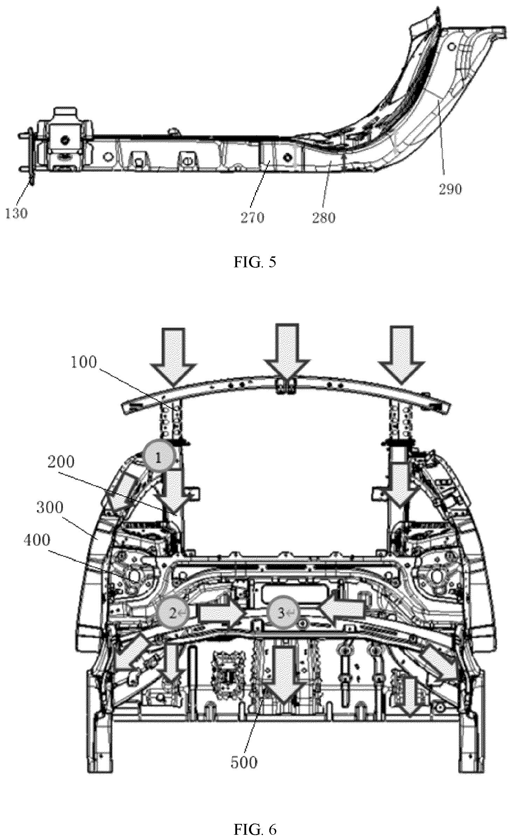

Therefore, referring to FIG. 6, upon the front compartment 1000 according to some embodiments of the application is subjected to a head-on collision, a collision energy is transferred from the front anti-collision-beam assembly 100 to first force transmission nodes (indicated by label ① in FIG. 6) of the two front longitudinal beams 200, and the collision energy forms force components at the first force transmission nodes, these force components are transferred to the front longitudinal beams 200 and the upper side beams 300 respectively; second force transmission nodes (indicated by label ② in FIG. 6) for the collision energy is formed at a root of the front longitudinal beam 200, and the collision energy forms force components at the second force transmission nodes, these force components are transferred to the A-pillar inner plate assemblies 600 and the front-dash-board assembly 500 respectively, and finally transferred by the front-dash-board assembly 500 to a front floor assembly of a vehicle body. Through above transmission path, the collision energy can be effectively absorbed through deformations of the front longitudinal beams 200/the upper side beams 300, thereby reducing a deformation of a passenger compartment and further protecting passengers.

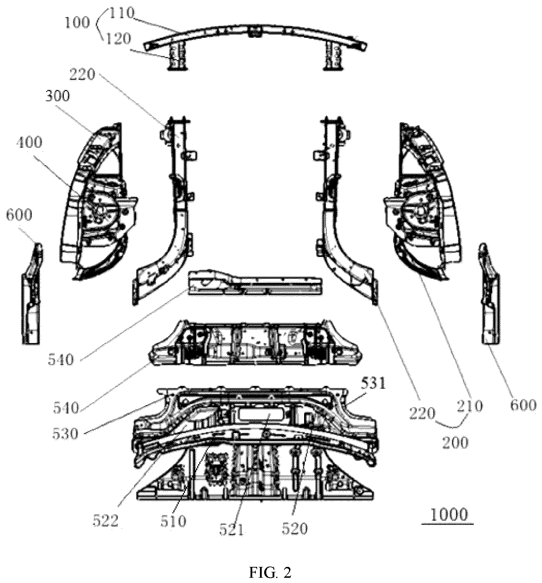

In one or more embodiments, referring to FIG. 2, the front longitudinal beam 200 includes a front-longitudinal-beam outer plate 210 and a front-longitudinal-beam inner plate 220. The front-longitudinal-beam outer plate 210 is connected to a corresponding upper side beam 300 and shock-tower assembly 400. The front-longitudinal-beam outer plate 210 may be a split structure or an integrated structure. The front-longitudinal-beam inner plate 220 is disposed at an inner side of the front-longitudinal-beam outer plate 210, and the front-longitudinal-beam inner plate 220 and the front-longitudinal-beam outer plate 210 enclose a longitudinal-beam inner cavity, thereby improving a structural strength of the front longitudinal beam 200.

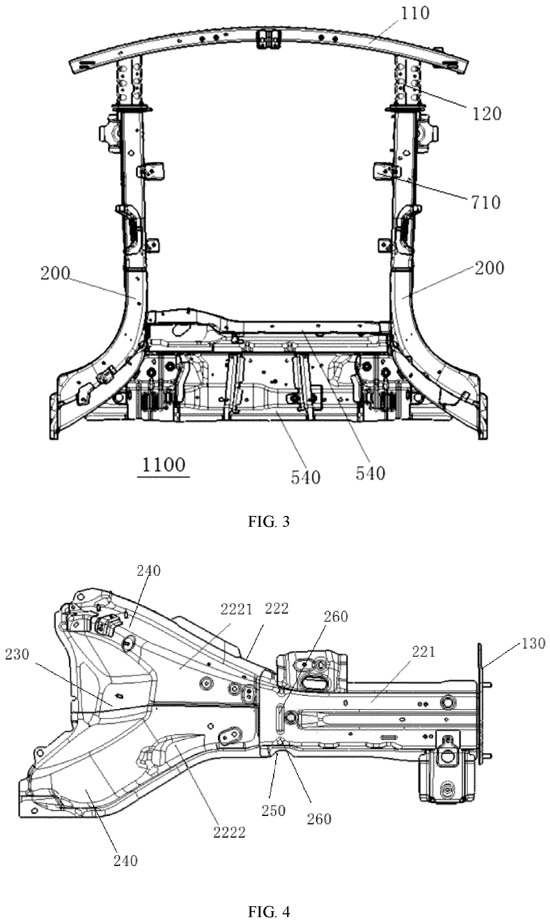

Referring FIG. 4, the front-longitudinal-beam inner plate 220 includes a first section 221 and a second section 222 connected in sequence along the length direction of the vehicle. The first section 221 and the second section 222 are fixed by spot welding at overlap portions. A volume of the second section 222 increases along a direction from a front of the vehicle to a rear of the vehicle, and specifically, a dimension of the second section 222 in the Z direction increases gradually and/or a dimension of the second section 222 in the Y direction increases gradually. The second section 222 includes a first force transmission portion 2221 and a second force transmission portion 2222 connected in sequence along the height direction of the vehicle. The first force transmission portion 2221 and the second force transmission portion 2222 are disposed at an upper portion and a lower portion respectively along the Z direction, and can be evenly distributed or unevenly distributed. The first force transmission portion 2221 and/or the second force transmission portion 2222 at least partially protrudes from the front-longitudinal-beam outer plate 210, that is, the second section 222 protrudes from the front-longitudinal-beam outer plate 210 at a root area of the front longitudinal beam 200. In one or more embodiments, the first force transmission portion 2221 and the second force transmission portion 2222 each protrude from the front-longitudinal-beam outer plate 210, a protruding portion is formed by areas which extend over a coverage area of the front-longitudinal-beam outer plate 210 of the first force transmission portion 2221 and the second force transmission portion 2222, the protruding portion is connected to the A-pillar inner plate assembly 600.

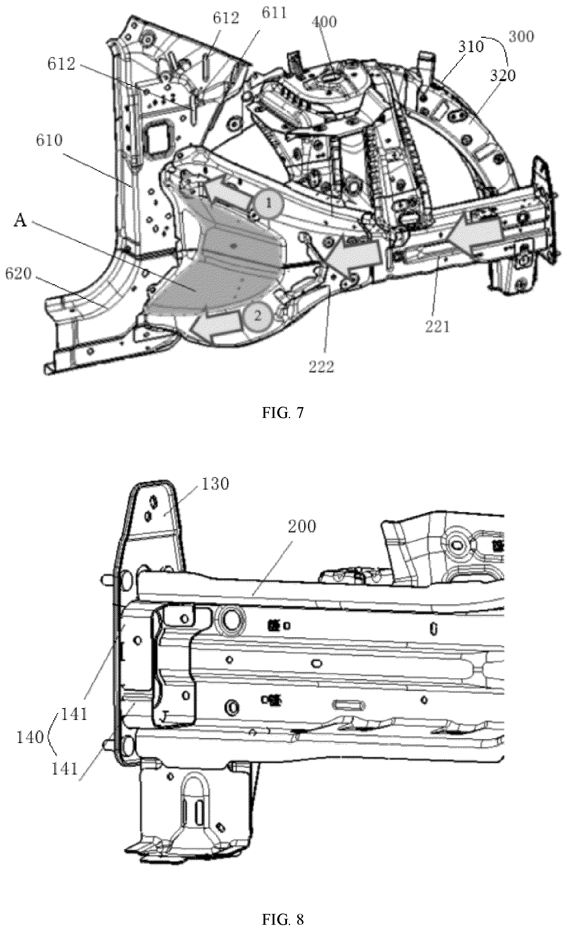

In one or more embodiments, referring to FIG. 4 and FIG. 7, a concave area 230 is provided at both the first force transmission portion 2221 and the second force transmission portion 2222, and the concave area 230 forms two convex ribs 240 at an upper portion of the first force transmission portion 2221 and a lower portion of the second force transmission portion 2222, such that the collision energy can be transferred along the two convex ribs 240. The concave area 230 forms an installation space A for a footrest plate, as shown in FIG. 7. That is to say, a transmission path with two channels is formed in a rear section of the front longitudinal beam 200. The two convex ribs 240 correspond to the two channels, respectively. The two channels are respectively connected to an upper portion of the A-pillar and a lower portion of the A-pillar. With the transmission path with two channels, footrest spaces in the passenger compartment for a driver and co-driver can be maximized, while requirements for a performance for the head-on collision can also be met.

In one or more embodiments, referring to FIG. 4, a notch 250 for avoiding a drive shaft is provided at a bottom of the front-longitudinal-beam inner plate 220. The drive shaft can be avoided by providing the notch 250, thereby facilitating arrangements of components. The front-longitudinal-beam inner plate 220 is provided with at least one deformation guide structure 260. The notch 250 and the at least one deformation guide structure 260 are at a same position along the length direction of the vehicle, that is, the notch 250 and the deformation guide structure 260 have a same coordinate in the X direction. The notch 250 is close to a junction between the first section 221 and the second section 222 The notch 250 and the deformation guide structure 260 serve as a first bending-deformation position for the front longitudinal beam 200 under a head-on collision condition. The deformation guide structure 260 may be a crush hole, a concave rib or a convex rib, and the application does not limit the specific structure thereof.

Referring to FIG. 5, in one or more embodiments, the second section 222 of the front-longitudinal-beam inner plate 220 includes a straight section 270, a transition section 280 and an oblique section 290 connected in sequence, that is, projections of the straight section 270, the transition section 280 and the oblique section 290 on a horizontal plane are a straight line segment, an arc segment and an oblique line segment, respectively. The straight section 270 is parallel to the X direction. The oblique section 290 may be specifically inclined relative to both the X direction and the Y direction, or may also be inclined relative to the X, Y, and Z directions. The straight section 270 is disposed at an angle to the oblique section 290, and the straight section 270 is smoothly connected to the oblique section 290 through the transition section 280. A contour line of the transition section 280 may be a circular arc or an elliptical arc. In one or more embodiments, a cross-sectional dimension of a middle portion of the transition section 280 is smaller than a cross-sectional dimension of an end portion of the transition section 280, thereby forming a weak zone in the middle portion of the transition section 280, and thus the weak zone is prone to be bent and deformed when the collision energy is transferred to the weak zone. Therefore, cross-sectional dimensions of the front longitudinal beam 200 can be changed by optimizing a shape at a turning portion (a transition portion from the straight section 270 to the oblique section 290 ) of the front longitudinal beam 200, thereby forming a second bending-deformation position for the front longitudinal beam 200 under the head-on collision condition. Along a direction from a front end to a rear end of the front longitudinal beam 200, the second bending-deformation position for the front longitudinal beam 200 is located behind the first bending-deformation position for the front longitudinal beam 200.

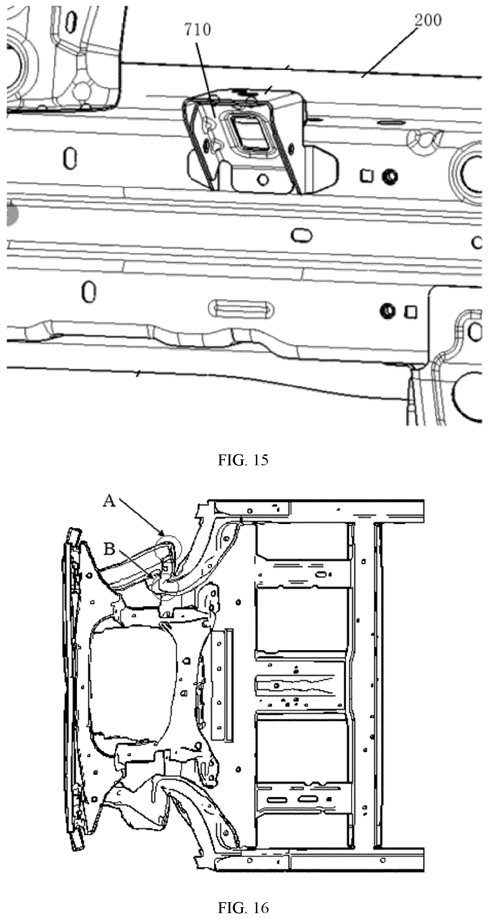

Referring to FIG. 16, unpon front compartment 1000 according to some embodiments of the application is subjected to the head-on collision, since the front longitudinal beam 200 has the notch 250 and the deformation guide structure 260, a bending and deformation will occur at the first bending-deformation position for the front longitudinal beam 200, and the first bending-deformation position is indicated by arrow A in FIG. 16. Since the front longitudinal beam 200 has changing cross-sectional dimensions, the bending and deformation will also occur at the second bending-deformation position for the front longitudinal beam 200, and the second bending-deformation position is indicated by arrow B in FIG. 16. The first bending-deformation position for the front longitudinal beam 200 and the second bending-deformation position for the front longitudinal beam 200 can be bent and deformed, such that the collision energy of the head-on collision can be fully absorbed.

In one or more embodiments, referring to FIG. 3, the front anti-collision-beam assembly 100 includes an anti collision beam 110, and two energy absorption boxes 120 connected to the anti collision beam 110. The energy absorption boxes 120 are connected to the front longitudinal beams 200. Referring to FIG. 4, in one or more embodiments, an anti-collision-beam installation plate 130 connected to the anti collision beam 110 is provided at a junction between the front longitudinal beam 200 and the front anti-collision-beam assembly 100 to facilitate an installation of the anti collision beam 110.

Referring to FIG. 8, in one or more embodiments, a reinforcement component 140 that fits into the anti-collision-beam installation plate 130 is provided in the front longitudinal beam 200. A structural strength of the front longitudinal beam 200 is ensured by the reinforcement component 140, and it can be effectively ensured that an end surface of the front longitudinal beam 200 facing the anti collision beam 110 will not be deformed under a low-speed collision condition, thereby reducing an after-sales maintenance cost of an entire vehicle after a low-speed collision. The reinforcement component 140 includes two U-shaped reinforcement inner plates 141. Two reinforcement inner plates 141 are interlocked with each other to enclose a cavity. The reinforcement inner plates 141 are welded to the anti-collision-beam installation plate 130 and the front longitudinal beam 200. In order to further improve a strength, a thickness of the reinforcement inner plate 141 may be disposed to be greater than a thickness of the front longitudinal beam 200.

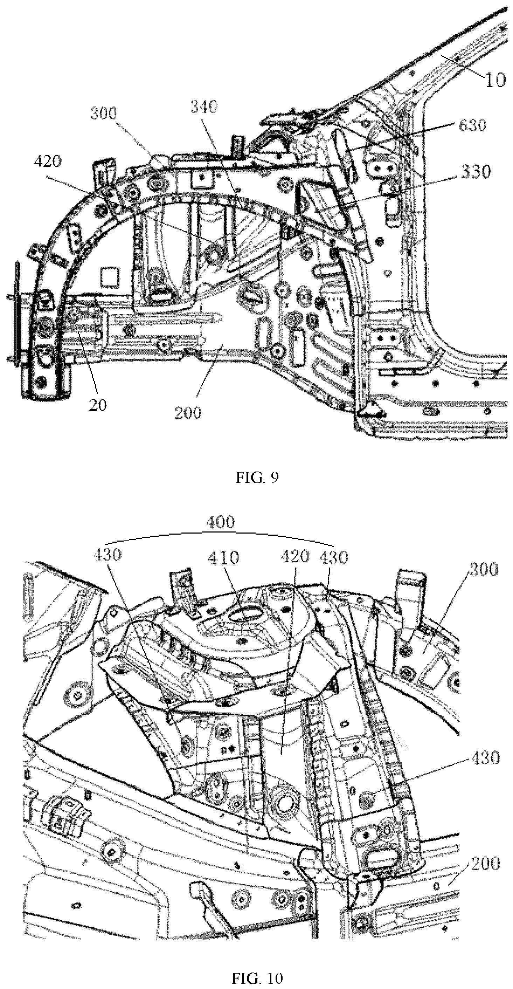

Referring to FIG. 7 and FIG. 9, the upper side beam 300 includes an upper-side-beam inner plate 320 and an upper-side-beam outer plate 310, which enclose a rectangular cavity. Various outer contour surfaces of the upper side beam 300 may be a smooth surface, a curved surface or a flat surface. In one or more embodiments, a height of a top of the upper side beam 300 is less than a height of a top of the A-pillar inner plate assembly 600. A top surface of the upper side beam 300 is horizontal in the longitudinal direction. A drop height between the top surface of the upper side beam 300 and a top surface of the A-pillar inner plate assembly 600 is less than a preset value. The A-pillar inner plate assembly 600 is connected to the upper side beam 300 of the front compartment 1000. A height of the top of the A-pillar inner plate assembly 600 is greater than a height of the top of the upper side beam 300 of the front compartment 1000, to form a step between a top of an A-pillar and the top of the upper side beam 300 of the front compartment 1000. The upper side beam 300 is relatively slender relative to the A-pillar inner plate assembly 600. When the vehicle is subjected to an impact force of a small offset collision, a collision load received by the upper side beam 300 of the front compartment 1000 is transferred to middle and lower portions of the A-pillar due to the step formed between the top of the A-pillar and the top of the upper side beam 300 of the front compartment 1000, thereby reducing the collision load transferred to an A-pillar upper-side-beam 10, reducing a deformation amount of the A-pillar upper-side-beam 10 bending towards the passenger compartment, ensuring a maintenance economy, reducing an intrusion amount towards a driving compartment of the A-pillar upper-side-beam 10, and reducing an intrusion amount of the A-pillar upper-side-beam 10 intruding into a space of the passenger compartment. At the same time, the upper side beam 300 of the front compartment 1000 transfers the collision load to the A-pillar, and the A-pillar transfers the collision load to door sill beams. The collision load is shared by the A-pillar and the door sill beams to reduce the collision load on the passenger compartment and a deformation amount of a door, so that rescue personnels can open the door to rescue the passengers, thereby improving a survival rate of the passengers, improving a safety of the vehicle in the small offset collision, and ensuring a safety of the passengers.

In one or more embodiments, referring to FIG. 9, a support box 20 is disposed at a front end of the upper side beam 300. The support box 20 is connected to the front end of the upper side beam 300 and the front end of the front longitudinal beam 200. In order to avoid front wheels, a profile surface of the support box 20 is a curved surface. The support box 20 is provided with a flanging, and has an overall structure with great strength. When the support box 20 is connected to the upper side beam 300 and the front longitudinal beam 200, the three enclose a cavity, so that the support box 20 is not easily deformed. The collision energy of the small offset collision can be transferred to the front longitudinal beam 200 by providing the support box 20, so that the front longitudinal beam 200 is bent and deformed to absorb the collision energy.

In order to further improve the collision performance, in one or more embodiments, a portion of the upper side beam 300 close to the A-pillar may be provided with a collapse hole 330, as shown in FIG. 9.

In one or more embodiments, the upper side beam 300 is provided with a welding edge 340 having a projection component in the height direction of the vehicle. In some embodiments, the welding edge 340 extends along the Z direction, thereby allowing a welding position of the upper side beam 300 and a compartment cover plate to be adjusted within a certain range, so as to adjust a height of the upper side beam 300, thereby facilitating an elimination of adverse effects of manufacturing tolerances and installation errors of components installed on the upper side beam 300 on an installation accuracy of the upper side beam 300, thereby improving a manufacturing accuracy of an entire vehicle.

In one or more embodiments, referring to FIG. 7, the A-pillar inner plate assembly 600 includes an A-pillar upper section 610 and an A-pillar lower section 620. The A-pillar upper section 610 is welded and fixed to the A-pillar lower section 620. In one or more embodiments, the A-pillar upper section 610 has an energy absorption portion 611 which is connected to the upper side beam 300 and may be provided with an energy absorption hole 612. The A-pillar lower section 620 is connected to the A-pillar upper section 610, and a width of the A-pillar lower section 620 is smaller than a width of the A-pillar upper section 610, that is, a front end of the A-pillar upper section 610 protrudes forward relative to the A-pillar lower section 620 to form the energy absorption portion 611. The front longitudinal beam 200 is connected to both the A-pillar upper section 610 and the A-pillar lower section 620. In some embodiments, the first force transmission portion 2221 of the second section 222 of the front-longitudinal-beam inner plate 220 is connected to the A-pillar upper section 610, and the second force transmission portion 2222 is connected to the A-pillar lower section 620.

Referring to FIG. 9, in one or more embodiments, the A-pillar inner plate assembly 600 may include at least one reinforcement box 630, which is connected to the A-pillar upper section 610 and/or the A-pillar lower section 620 and is located at a rear side of the energy absorption portion 611. The number of the reinforcement boxes 630 is preferably more than two, and end surfaces of a plurality of reinforcement boxes 630 facing the energy absorption portion 611 are flush, and the end surfaces are parallel to a vertical plane (the Y-O-Z plane). When the energy absorption portion 611 collapses to the end surface of the reinforcement box 630, the end surface of the reinforcement box 630 can be used to support the energy absorption portion 611 and a barrier, thereby increasing a contact area between the A-pillar inner plate assembly 600 and the barrier, ensuring a structural strength of the A-pillar inner plate assembly 600, and transferring the impact force to the door sill beams of the vehicle body.

In one or more embodiments, referring to FIG. 10, the shock-tower assembly 400 includes a shock tower 410, a front wheel cover 420, and two wheel cover reinforcement plates 430. The front wheel cover 420 may be connected to a bottom of the shock tower 410, for example by welding. In one or more embodiments, the front wheel cover 420 and the shock tower 410 may also be designed as an integrated structure. The two wheel cover reinforcement plates 430 are distributed at two sides of the front wheel cover 420 along a length direction of the vehicle body, and are connected to the shock tower 410, the front wheel cover 420, the front longitudinal beam 200 and the upper side beam 300, so as to strengthen a structure at the shock tower 410.

Referring to FIG. 9, in one or more embodiments, a bottom of the front wheel cover 420 is provided with several flanging structures connected to the front longitudinal beam 200. The flanging structures wrap a portion of the front longitudinal beam 200, and thus a vertical stiffness of the front wheel cover 420 can be effectively improved and a structural integrity of the front wheel cover 420 during a collision can be ensured. At the same time, the flanging structures can vertically pull the front longitudinal beam 200, such that the front longitudinal beam 200 can vertically deform to absorb the collision energy. FIG. 16 shows a structure of the front longitudinal beam 200 after vertical deformation.

Referring to FIG. 1 and FIG. 2, in one or more embodiments, the front-dash-board assembly 500 includes a front dash board 510, a water gutter 520, a reinforcement beam 530 and at least one front-dash-board crossbeam 540. Two ends of the front dash board 510 are respectively connected to two A-pillar inner plate assemblies 600. The front-dash-board crossbeam 540 is connected to the front dash board 510. Since an area of the front dash board 510 is large, the front dash board 510 is strengthened by the front-dash-board crossbeam 540 to improve a dynamic stiffness of the front dash board 510. A plurality of front-dash-board crossbeams 540 may be provided according to design requirements. The plurality of front-dash-board crossbeams 540 are distributed at an interval along the Z direction, and the plurality of front-dash-board crossbeams 540 may also have an interval between one another along the X direction at the same time.

Referring to FIG. 2, the water gutter 520 is connected to a front side of the front dash board 510 and is configured to collect rainwater from a windshield. An air-conditioning inlet 521 is provided at a middle portion of the water gutter 520, and drain outlets 522 are provided at two ends of the water gutter 520. An air intake effect is improved by providing the air-conditioning inlet 521 in the middle portion of the water gutter 520. A height of the air-conditioning inlet 521 is greater than that of the drain outlet 522 to prevent rainwater from flowing back into the air-conditioning inlet 521. In one or more embodiments, a water retaining wall may be provided around the air-conditioning inlet 521 to prevent rainwater from flowing therein.

The reinforcement beam 530 is connected to a front side of the water gutter 520, and two ends of the reinforcement beam 530 are respectively connected to the two shock-tower assemblies 400. The reinforcement beam 530 plays a role in strengthening a dynamic stiffness at the water gutter 520. Since the two ends of the reinforcement beam 530 are respectively connected to the two shock-tower assemblies 400, the reinforcement beam 530 can be functionally regarded as a crossbeam. The reinforcement beam 530 may be connected to the shock tower 410 of the shock-tower assembly 400 or at least one wheel cover reinforcement plate 430 , and a specific connection position of the reinforcement beam 530 is not limited in the application.

Referring to FIG. 2, in one or more embodiments, in order to improve a structural strength at the shock tower 410, a connection portion 531 is provided at an end of the reinforcement beam 530. The connection portion 531 at least wraps a portion of the shock-tower assembly 400. The connection portion 531 is located between the front dash board 510 and the shock-tower assembly 400. The connection portion 531 is spot-welded to the two wheel cover reinforcement plates 430 at front and rear and the shock tower 410 in the Z direction, and the connection portion 531 is spot-welded to the upper-side-beam inner plate 320 in the Y direction. The above structure can effectively improve a Y-direction stiffness of a mounting point for a front shock absorber at a side of the vehicle body and a lateral swing mode of the front compartment 1000. After the Y-direction stiffness of the front compartment 1000 is improved, a Y-direction slip amount of the entire vehicle is increased under a small offset collision condition, so that the entire vehicle has a high probability to slide laterally, thereby reducing a squeezing of the barrier on the passenger compartment and improving the safety of the entire vehicle. A connection structure between the reinforcement beam 530 and the shock-tower assembly 400 can effectively improve a lateral rigidity of the front compartment 1000 to reduce an intrusion amount of the shock tower 410, while the collision energy can be absorbed through a bending and deformation of a connecting plate for the water gutter.

Therefore, referring to FIG. 6, upon the front compartment 1000 according to some embodiments of the application is subjected to the head-on collision, a collision energy is transferred from the front anti-collision-beam assembly 100 to first force transmission nodes (indicated by label ① in FIG. 6) of the two front longitudinal beams 200, and the collision energy forms force components at the first force transmission nodes, which are transferred to the front longitudinal beams 200 and the upper side beams 300 respectively; second force transmission nodes (indicated by label ② in FIG. 6 ) for the collision energy is formed at a root of the front longitudinal beam 200, and the collision energy forms force components at the second force transmission nodes, which are transferred to the A-pillar inner plate assemblies 600 and the front-dash-board assembly 500 respectively; a third force transmission node (indicated by label (3) in FIG. 6 ) for the collision energy can also be formed in a middle portion of the front-dash-board assembly 500, and the collision energy is gathered at the third force transmission node, and finally transferred by the front-dash-board assembly 500 to the front floor assembly of the vehicle body. Through above transmission path, the collision energy can be effectively absorbed through deformations of the front longitudinal beams 200/the upper side beams 300, thereby reducing a deformation of the passenger compartment and further protecting the passengers.

Referring to FIG. 3, FIG. 14 and FIG. 15, in one or more embodiments, the front compartment 1000 further includes a bearing bracket 700, which is disposed between the front-dash-board assembly 500 and the front anti-collision-beam assembly 100 and is configured to install components such as batteries. The bearing bracket 700 is connected to the two front longitudinal beams 200 respectively through at least two support seats 710, and each support seat 710 is connected to the front longitudinal beam 200 in a longitudinal direction and a vertical direction, so that a connection rigidity between the support seat 710 and the basic frame 1100 is guaranteed, and a risk of detachment of support seat 710 from the basic frame 1100 is reduced. Since two ends of each bearing bracket 700 are connected to two support seats 710, a connection stiffness between the bearing bracket 700 and the front longitudinal beam 200 is improved through the support seats 710, and the collision energy can be transferred to the front longitudinal beam 200, so that the front longitudinal beam 200 bends and deforms to absorb the collision energy. When the vehicle collides, the basic frame 1100 can transfer the collision load from the support seat 710 to the bearing bracket 700, and the collision load can be shared by the bearing bracket 700 to reduce an intrusion amount towards the passenger compartment of components carried in the front compartment 1000, thereby reducing damage to the passenger compartment, and ensuring the safety of the passengers in the vehicle. At the same time, a lateral stiffness of the basic frame 1100 can be effectively improved, and therefore the basic frame 1100 can bear a larger lateral force, thereby achieving a lateral sliding of the entire vehicle and pushing the vehicle away from a rigid barrier, thereby reducing a damage of the rigid barrier to the passenger compartment of the vehicle body and the passengers, and further ensuring the safety of the passengers in the vehicle.

In one or more embodiments, referring to FIG. 1 and FIG. 11 to FIG. 13 , the front compartment 1000 may further include a front-end frame 800. The front-end frame 800 is configured to install a water tank or a radiator, and is connected between the front longitudinal beam 200 and the front anti-collision-beam assembly 100. The front-end frame 800 includes a water tank crossbeam 810 and two oppositely disposed water tank columns 820, in which the water tank crossbeam 810 may be provided as one or two. The front-end frame 800 may be a split structure or an integrated structure.

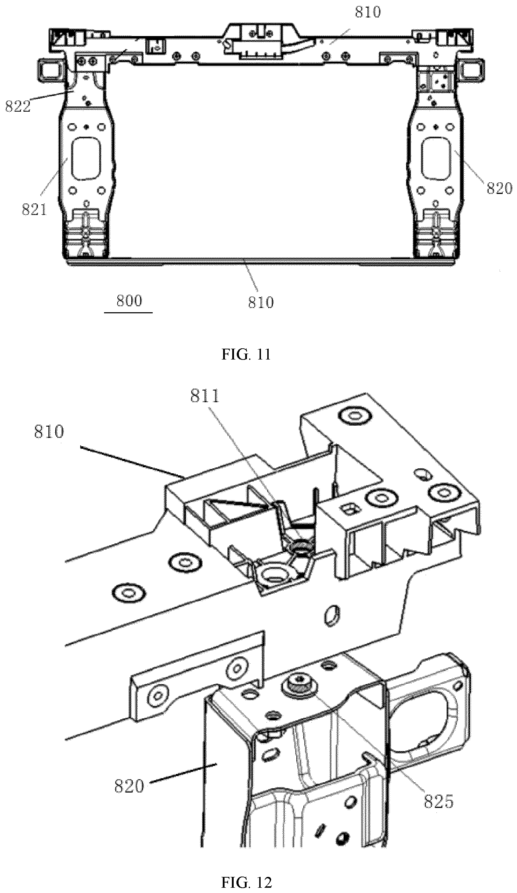

In one or more embodiments, referring to FIG. 11, the water tank crossbeam 820 includes a bearing portion 821 for bearing the energy absorption box 120 and installation portions 822 provided at two ends of the bearing portion 821. Two installation portions 822 are respectively connected to two water tank crossbeams 810. A width of the bearing portion 821 is greater than a width of the installation portion 822, so that the water tank crossbeam 820 becomes a structure that is wide in a middle and narrow at a top and bottom. The bearing portion 821 can increase a lateral dimension of the energy absorption box 120 as much as possible, while the bearing portion 821 can ensure a safe gap between the water tank crossbeam 820 and the water tank, thereby ensuring that a lateral dimension of the energy absorption box 120 is consistent with a lateral cross-sectional dimension of a longitudinal beam of the front compartment of the basic frame 1100, so that as much energy as possible can be absorbed through a deformation of the energy absorption box 120 in a head-on collision condition.

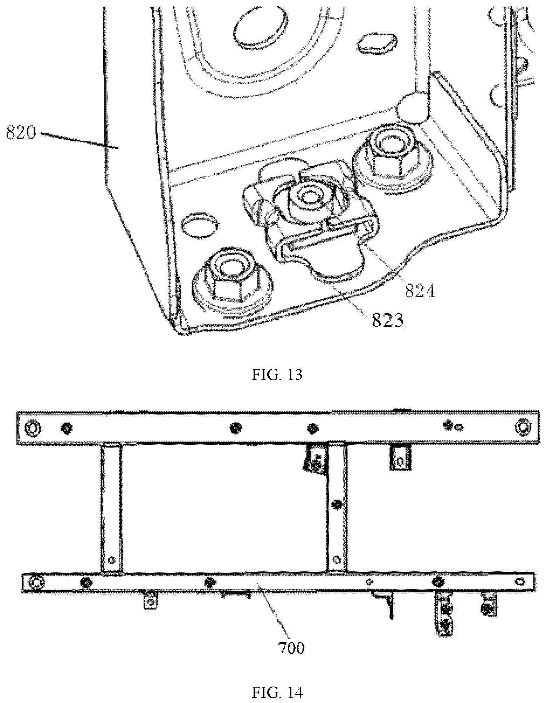

In one or more embodiments, referring to FIG. 12 and FIG. 13, a nut box 823 and a floating nut 824 movably disposed in the nut box 823 are provided at a top of the water tank column 820. The floating nut 824 can move in the nut box 823 with a floating amount of ±3 mm in a horizontal direction and ±3 mm in a vertical direction. The floating nut 824 is connected to a positioning bolt 825. The positioning bolt 825 includes a head portion and a screw portion connected to the head portion. A through hole is opened on the installation portion 822, and the screw portion is passed through the through hole and is connected to the floating nut 824. When the screw portion and the floating nut 824 are not tightened, the head portion of the positioning bolt 825 can move within a certain range. In one or more embodiments, a diameter of the head portion of the positioning bolt 825 is larger than a diameter of the screw portion and a diameter of the through hole of the installation portion 822. A diameter of the screw portion of the positioning bolt 825 is smaller than the diameter of the through hole of the installation portion 822, so that the screw portion can move in the through hole. At the same time, the head portion can be configured to limit the positioning bolt 825 to prevent the positioning bolt 825 from falling. The water tank crossbeam 810 is provided with a positioning hole 811 for accommodating the head portion of the positioning bolt 825. The head portion of the positioning bolt 825 cooperates with the positioning hole 811 to achieve positioning and installation of the water tank crossbeam 810, thereby improving a manufacturing accuracy of the entire vehicle.

In a second aspect of the application, a vehicle is provided. The vehicle includes the front compartment 1000 according to the first aspect of the application. The vehicle may be a pure electric vehicle or a hybrid electric vehicle, and may be a family car, a bus, a truck and so on. Since the application does not improve a specific structure of the vehicle, the structure of the vehicle that has not been changed in the application can refer to the related art, and a specific structure will not be elaborated here.

Although preferred embodiments of the application have been described, additional modifications and variations may be made to these embodiments by those skilled in the art once the basic inventive concepts are known. Therefore, it is intended that the appended claims be interpreted as including the preferred embodiment as well as all modifications and variations that fall within the scope sought for by the application.

Obviously, those skilled in the art can make various modifications and variations to the application without departing from the spirit of and the scope sought for by the application. Thus, if these modifications and variations of the application fall within the scope sought for by the claims of the application and the equivalent technologies thereof, the application is also intended to include these modifications and variations.

## Claims

1. A front compartment, comprising:
two front longitudinal beams, distributed at an interval along a width direction of a vehicle;
a front-dash-board assembly, connected to rear ends of the two front longitudinal beams;
a front anti-collision-beam assembly, connected to front ends of the two front longitudinal beams;
two upper side beams, respectively connected to corresponding front longitudinal beams;
two A-pillar inner plate assemblies, respectively connected to a corresponding front longitudinal beam and upper side beam; and
two shock-tower assemblies, disposed in areas surrounded by corresponding front longitudinal beams and upper side beams, and connected to the front dash-board assembly, the front longitudinal beams and the upper side beams.

2. The front compartment according to claim 1, wherein the front longitudinal beam comprises:
a front-longitudinal-beam outer plate, connected to a corresponding upper side beam and shock-tower assembly;
a front-longitudinal-beam inner plate, disposed at an inner side of the front-longitudinal-beam outer plate to enclose a longitudinal beam inner cavity with the front-longitudinal-beam outer plate; and
the front-longitudinal-beam inner plate comprises a first section and a second section connected in sequence along a length direction of the vehicle, and a height of the second section increases along a direction from a front of the vehicle to a rear of the vehicle; the second section comprises a first force transmission portion and a second force transmission portion connected in sequence along a height direction of the vehicle; the first force transmission portion and/or the second force transmission portion at least partially protrudes from the front-longitudinal-beam outer plate to form a protruding portion, and the protruding portion is connected to the A-pillar inner plate assembly.

3. The front compartment according to claim 2, wherein: a notch for avoiding a drive shaft is provided at a bottom of the front-longitudinal-beam inner plate; the front-longitudinal-beam inner plate is provided with at least one deformation guide structure; the notch and the at least one deformation guide structure are located at a same position along the length direction of the vehicle, and the notch is close to a junction between the first section and the second section.

4. The front compartment according to claim 2, wherein: the second section comprises a straight section, a transition section and an oblique section connected in sequence, and the straight section is disposed at an angle to the oblique section; a cross-sectional dimension of a middle portion of the transition section is smaller than a cross-sectional dimension of an end portion of the transition section.

5. The front compartment according to any one of claims 1 to 4, wherein: a height of a top of the upper side beam is less than a height of a top of the A-pillar inner plate assembly;
a top surface of the upper side beam is horizontal in a longitudinal direction; a drop height between the top surface of the upper side beam and a top surface of the A-pillar inner plate assembly is less than a preset value; and the upper side beam is provided with a welding edge having a projection component in the height direction of the vehicle.

6. The front compartment according to claim 5, wherein the A-pillar inner plate assembly comprises:
an A-pillar upper section, having an energy absorption portion connected to the upper side beam, wherien the energy absorption portion is provided with an energy absorption hole;
an A-pillar lower section, connected to the A-pillar upper section, and a width of the A-pillar lower section is smaller than a width of the A-pillar upper section; the front longitudinal beam is connected to both the A-pillar upper section and A-pillar lower section; and
at least one reinforcement box, connected to the A-pillar upper section and/or the A-pillar lower section and located at a rear side of the energy absorption portion.

7. The front compartment according to any one of claims 1 to 4, wherein the shock-tower assembly comprises:
a shock tower;
a front wheel cover, connected to a bottom of the shock tower;
two wheel cover reinforcement plates, distributed at two sides of the front wheel cover along a length direction of a vehicle body, and connected to the shock tower, the front wheel cover, the front longitudinal beam and the upper side beam.

8. The front compartment according to any one of claims 1 to 4, wherein the front-dash-board assembly comprises:
a front dash board, having two ends which are respectively connected to the two A-pillar inner plate assemblies;
at least one front-dash-board crossbeam, connected to the front dash board;
a water gutter, connected to a front side of the front dash board; an air conditioning inlet is provided at a middle portion of the water gutter, and drain outlets are provided at two ends of the water gutter; a height of the air conditioning inlet is greater than that of the drain outlet; and
a reinforcement beam, connected to a front side of the water gutter, and having two ends which are respectively connected to the two shock-tower assemblies.

9. The front compartment according to claim 8, wherein a connection portion is provided at an end of the reinforcement beam, and the connection portion wraps around the shock-tower assembly and is located between the front dash board and the shock-tower assembly.

10. A vehicle, comprising at least one front compartment according to any one of claims 1-9.
